(19) **Europäisches Patentamt / European Patent Office / Office européen des brevets**

(11) **EP 4 394 005 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**C09D 11/30** (2014.01)     **B41M 5/00** (2006.01)
**D06P 5/30** (2006.01)     **B41J 2/01** (2006.01)

(21) Application number: **22886842.8**

(22) Date of filing: **20.10.2022**

(52) Cooperative Patent Classification (CPC):
**B41J 2/01; B41M 5/00; C09D 11/30; D06P 5/30**

(86) International application number:
**PCT/JP2022/039035**

(87) International publication number:
**WO 2023/074514 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2021 JP 2021176292**

(71) Applicant: **DIC Corporation**
**Tokyo 174-8520 (JP)**

(72) Inventors:
• **NAITO Wakana**
  **Takaishi-shi, Osaka 592-0001 (JP)**
• **YAMAMOTO Shinya**
  **Takaishi-shi, Osaka 592-0001 (JP)**

(74) Representative: **Kraus & Lederer PartGmbB**
**Thomas-Wimmer-Ring 15**
**80539 München (DE)**

(54) **BINDER FOR AQUEOUS INKJET INKS, AQUEOUS INKJET INK, AND PRINTED LAYER**

(57) The present invention provides a binder for aqueous inkjet inks containing a composite resin (A) and an aqueous medium (B), the composite resin (A) forming core-shell-type particles having a shell part containing a polyurethane (a1) having acid groups and a core part containing an acrylic polymer (a2). The present invention also provides an aqueous inkjet ink containing the binder for aqueous inkjet inks, and a printed layer. This binder for aqueous inkjet inks is excellent in the abrasion resistance of printed products such as plain paper, coated paper, and films and the washing resistance of fabrics and can thus be suitably used for printing on various recording media.

EP 4 394 005 A1

**Description**

Technical Field

The present invention relates to a binder for aqueous inkjet inks, an aqueous inkjet ink, and a printed layer.

Background Art

An inkjet (IJ) recording apparatus is a system of printing in which small droplets of an ink composition are caused to fly and adhere to a recording medium such as paper to perform printing. Against the backdrop of rising demand for on-demand printing, the use of IJ printers has been rapidly expanding in recent years for industrial wide-format applications, textile applications, soft packaging applications, and the like.

As an inkjet ink used for the inkjet recording apparatus, for example, one containing a polycarbonate-based urethane resin with an elongation at break of 300% or more has been developed (refer to PTL 1). However, unfortunately, this ink is insufficient in the abrasion resistance and washing resistance of printed products, which have been more highly demanded in recent years.

Citation List

Patent Literature

PTL 1: Japanese Patent No. 6119919

Summary of Invention

Technical Problem

An object of the present invention is to provide a binder for aqueous inkjet inks producing printed products excellent in abrasion resistance and washing resistance.

Solution to Problem

The inventors of the present invention have conducted earnest studies in order to achieve the above object to find that a binder for aqueous inkjet inks containing a specific composite resin and an aqueous medium can achieve the above object and have completed the invention.

That is, the present invention relates to a binder for aqueous inkjet inks containing a composite resin (A) and an aqueous medium (B), the composite resin (A) forming core-shell-type particles having a shell part containing a polyurethane (a1) having acid groups and a core part containing an acrylic polymer (a2).

Advantageous Effects of Invention

The binder for aqueous inkjet inks according to the present invention is excellent in the abrasion resistance of printed products such as plain paper, coated paper, and films and the washing resistance of fabrics and can thus be suitably used for printing on various recording media. Description of Embodiments

A binder for aqueous inkjet inks according to the present invention is a binder for aqueous inkjet inks containing a composite resin (A) and an aqueous medium (B), the composite resin (A) forming core-shell-type particles having a shell part containing a polyurethane (a1) having acid groups and a core part containing an acrylic polymer (a2) having hydroxy groups.

The core-shell-type particles of the composite resin (A) have a form in which the polyurethane (a1) internally incorporates and covers part or whole of the acrylic polymer (a2) and are dispersed in the aqueous medium (B).

The polyurethane (a1) forming the shell part of the composite resin (A) is obtained by the reaction of a polyol and a polyisocyanate, and the acid groups of the polyurethane (a1) can be easily introduced into the polyurethane (a1) by using a polyol having acid groups as one component forming the polyol.

Examples of the polyol having acid groups include diols having a carboxy group or a sulfonic acid group, and the diols having a carboxy group are preferably contained. Examples of the diols having a carboxy group include 2,2-dimethylolpropionic acid, 2,2-dimethylolbutanoic acid, 2,2-dimethylolbutyric acid, and 2,2-dimethylolvaleric acid. Among these, 2,2-dimethylolpropionic acid is preferred. Polyester polyols having a carboxy group obtained by reacting the polyols having a carboxy group and various polycarboxylic acids can also be used. Examples of the polycarboxylic acids include aliphatic polycarboxylic acids such as succinic acid, adipic acid, sebacic acid, and dodecanedicarboxylic acid; alicyclic polycarboxylic acids such as 1,4-cyclohexanedicarboxylic acid and cyclohexanetricarboxylic acid; aromatic polycarboxylic acids such as terephthalic acid, isophthalic acid, phthalic acid, and naphthalene dicarboxylic acid; and anhydrides of these. These polyols can be used alone or in combination of two or more.

Examples of the polyols having a sulfonic acid group include polyester polyols obtained by reacting dicarboxylic acids such as 5-sulfoisophthalic acid, sulfoterephthalic acid, 4-sulfophthalic acid, and 5[4-sulfophenoxy]isophthalic acid or salts thereof and low-molecular weight polyols exemplified as being available for the production of the polyester polyols having an aromatic structure. These polyols can be used alone or in combination of two or more.

Examples of the other polyols that can be used in combination with the polyols having acid groups include polyether polyols, polyester polyols, and polycarbonate polyols.

Examples of the polyether polyols include ones that are addition-polymerized with an alkylene oxide using one or two or more compounds having two or more active hydrogen atoms as initiators.

Examples of the initiators include ethylene glycol, diethylene glycol, triethylene glycol, trimethylene glycol, 1,2-propanediol, 1,3-propanediol, 1,3-butanediol, 1,4-butanediol, 1,6-hexanediol, neopentyl glycol, glycerin, trimethylolethane, trimethylolpropane, sorbitol, sucrose, aconitic sugar, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propane-trithiol.

Examples of the alkylene oxide include ethylene oxide, propylene oxide, butylene oxide, styrene oxide, epichlorohydrin, and tetrahydrofuran.

Examples of the polyester polyols include aliphatic polyester polyols and aromatic polyester polyols obtained by an esterification reaction of low-molecular weight polyols and polycarboxylic acids, polyesters obtained by a ring opening polymerization reaction of cyclic ester compounds such as ε-caprolactone, and copolymerized polyesters of these.

Examples of the low-molecular weight polyols used for the production of the polyester polyols include aliphatic polyols with a molecular weight of 50 to 300 such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, neopentyl glycol, 1,5-hexanediol, 1,6-hexanediol, 2,5-hexanediol, 1,7 heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, glycerin, trimethylolpropane, ditrimethylolpropane, trimethylolpropane, and pentaerythritol; polyols having an alicyclic structure such as cyclohexanedimethanol and hydrogenated bisphenol A; and polyols having an aromatic structure such as bisphenol A and bisphenol F.

Examples of the polycarboxylic acids include aliphatic polycarboxylic acids such as succinic acid, adipic acid, sebacic acid, and dodecanedicarboxylic acid; alicyclic polycarboxylic acids such as 1,4-cyclohexanedicarboxylic acid and cyclohexane tricarboxylic acid; aromatic polycarboxylic acids such as terephthalic acid, isophthalic acid, phthalic acid, and naphthalene dicarboxylic acid; and anhydrides and esters thereof.

Examples of the polycarbonate polyols include ones obtained by reacting carbonate esters and polyols and ones obtained by reacting phosgene and bisphenol A or the like.

Examples of the carbonate esters include methyl carbonate, dimethyl carbonate, ethyl carbonate, diethyl carbonate, cyclocarbonate, and diphenyl carbonate.

Examples of the polyols that can react with the carbonate esters include dihydroxy compounds with a relatively low-molecular weight such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-butyl-2-ethylpropanediol, 2-methyl-1,8-octanediol, neopentyl glycol, 1,4-cyclohexanediol, 1,4-cyclohexanedimethanol, hydroquinone, resorcinol, bisphenol-A, bisphenol-F, and 4,4'-biphenol; polyether polyols such as polyethylene glycol, polypropylene glycol, and polytetramethylene glycol; and polyester polyols such as polyhexamethylene adipate, polyhexamethylene succinate, and polycaprolactone.

The use amount of the polyols having acid groups is preferably 3 to 50% by mass with respect to the entire amount of the polyols used in the production of the polyurethane (a1).

Examples of the polyisocyanate include aromatic diisocyanates such as phenylene diisocyanate, tolylene diisocyanate, diphenylmethane diisocyanate, and naphthalene diisocyanate; and aliphatic diisocyanates or diisocyanates having an aliphatic cyclic structure such as hexamethylene diisocyanate, lysine diisocyanate, cyclohexane diisocyanate, isophorone diisocyanate, dicyclohexylmethane diisocyanate, xylylene diisocyanate, and tetramethylxylylene diisocyanate. Diisocyanates having an aliphatic cyclic structure are preferred because abrasion resistance and washing resistance further improve. These polyisocyanates can be used alone or in combination of two or more.

The molar ratio (NCO/OH) of isocyanate groups (NCO) contained in the polyisocyanate to hydroxy groups (OH) contained in the polyol is preferably 0.9 to 2.

As the polyurethane (a1), ones with a higher molecular weight by using a chain elongating agent such as a polyamine can also be used.

Examples of the polyamine include diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, and 1,4-cyclohexanediamine; diamines having one primary amino group and one secondary amino group such as N-hydroxymethylaminoethylamine, N-hydroxyethylaminoethylamine, N-hydroxypropylaminopropylamine, N-ethylaminoethylamine, and N-methylaminopropylamine; polyamines such as diethylenetriamine, dipropylenetriamine, and triethylenetetramine; hydrazine compounds such as hydrazine, N,N'-dimethylhydrazine, and 1,6-hexamethylenebishydrazine; dihydrazide compounds such as succinic acid dihydrazide, adipic acid dihydrazide, glutaric acid dihydrazide, sebacic acid dihydrazide, and isophthalic acid dihydrazide; and semicarbazide compounds such as β-semicarbazide propionic acid hydrazide, 3-semicarbazide-propyl-carbazate, and semicarbazide-3-semicarbazidomethyl-3,5,5-trimethylcyclohexane. These polyamines can be used alone or in combination of two or more.

The polyamine is preferably used in an equivalent ratio between amino groups of the polyamine and isocyanate groups of a urethane prepolymer of 0.8 to 1.

The chain elongation reaction is preferably performed by producing an aqueous dispersion of polyurethane and then mixing the aqueous dispersion with the chain elongating agent such as the polyamine.

The acid value of the polyurethane (a1) is preferably 10 to 70 and more preferably 15 to 65 because the balance among water dispersibility, abrasion resistance, and washing resistance further improves.

The acid value of the polyurethane (a1) in the present invention is a value obtained by calculation from a raw material composition.

The weight average molecular weight of the polyurethane (a1) is preferably 10,000 to 500,000 and more preferably 10,000 to 300,000 because the balance among water dispersibility, abrasion resistance, and washing resistance further improves.

In the present invention, the weight average molecular weight and the number average molecular weight are values measured by gel permeation chromatography (GPC) using polystyrene as a standard sample, unless otherwise noted.

The acid groups of the polyurethane (a1) are preferably neutralized with a basic compound because the water dispersibility of the composite resin (A) further improves.

Examples of the basic compound include alkylamines such as monomethylamine, dimethylamine, trimethylamine, monoethylamine, diethylamine, triethylamine, monopropylamine, dipropylamine, and tripropylamine; alkanolamines such as monoethanolamine, diethanolamine, monoisopropanolamine, diisopropanolamine, N-methylethanolamine, N,N-dimethylethanolamine, N,N-diethylethanolamine, 2-amino-2-methylpropanol, 2-(dimethylamino)-2-methylpropanol, and N-methyldiethanolamine; organic amines such as polyvalent amines such as ethylenediamine, diethylenetriamine, triethylenetetramine, and tetraethylenepentamine; ammonia (water); and metal hydroxides such as sodium hydroxide, potassium hydroxide, and lithium hydroxide. Metal hydroxides are preferred, and potassium hydroxide is more preferred because abrasion resistance and washing resistance further improve. These basic compounds can be used alone or in combination of two or more.

The acrylic polymer (a2) forming the core part of the composite resin (A) is obtained by a polymerization reaction of a (meth)acrylic monomer and, if necessary, other unsaturated monomers.

Examples of the (meth) acrylic monomer include $C_{4-10}$ alkyl (meth)acrylates such as methyl (meth)acrylate, ethyl (meth)acrylate, propyl (meth)acrylate, butyl (meth)acrylate, isobutyl (meth)acrylate, tert-butyl (meth)acrylate, pentyl (meth)acrylate, neopentyl (meth)acrylate, isoamyl (meth)acrylate, hexyl (meth)acrylate, cyclopentyl (meth)acrylate, and cyclohexyl (meth)acrylate;

$C_{11-22}$ alkyl (meth) acrylates such as octyl (meth)acrylate, 2-ethylhexyl (meth)acrylate, isooctyl (meth)acrylate, nonyl (meth)acrylate, dodecyl (meth)acrylate, tridecyl (meth)acrylate, stearyl (meth)acrylate, isostearyl (meth)acrylate, and hexadecyl(meth)acrylate; and

allyl (meth)acrylates such as phenyl (meth)acrylate; $C_{10-20}$ aralkyl (meth) acrylates such as benzyl (meth)acrylate and phenethyl (meth)acrylate;

allyloxy alkyl (meth)acrylates such as phenoxyethyl (meth)acrylate;

hydroxy group-containing (meth)acrylates such as 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, N-(2-hydroxyethyl) (meth)acrylamide, glycerin mono(meth)acrylate, polyethylene glycol mono(meth)acrylate, polypropylene glycol mono (meth)acrylate, 2-hydroxy-3-phenoxypropyl (meth)acrylate, 2-(meth)acryloyloxyethyl-2-hydroxyethyl phthalate, lactonemodified (meth)acrylate having hydroxy groups at its ends;

nitrogen atom-containing (meth)acrylates such as;

polyoxyethylene group-containing (meth)acrylates such as polyethylene glycol (meth)acrylate, methoxy polyethylene glycol (meth)acrylate, polyethylene glycol-polypropylene glycol copolymerized (meth)acrylate, methoxy polyethylene glycol-polypropylene glycol copolymerized (meth)acrylate, polyethylene glycol-polytetramethylene glycol copolymerized (meth)acrylate, and methoxy polyethylene glycol-polytetramethylene glycol copolymerized (meth)acrylate;

nitrogen atom-containing (meth)acrylic monomers such as (meth)acrylonitrile, (meth)acrylamide, N-methyl (meth)acrylamide, N-isopropyl (meth)acrylamide, N-hydroxyethyl (meth)acrylamide, N-methylol (meth)acrylamide, N-methoxyethyl (meth)acrylamide, N,N-dimethyl (meth)acrylamide, N,N-diethyl (meth)acrylamide, N,N-dimethylaminoethyl (meth)acrylate, N,N-diethylaminoethyl (meth)acrylate, N,N-diethylaminopropyl (meth)acrylate, N,N-dimethylaminopropyl (meth)acrylamide, N-(meth)acryloyl morpholine, N-(meth)acryloyl pyrrolidine, N-vinylformamide, N-vinylpyrrolidone, N-vinylimidazole, N-vinylcarbazole, N-vinylquinoline, and N-vinylpiperidine.

These (meth)acrylic monomers can be used alone or in combination of two or more.

Examples of the other unsaturated monomers include crotonic acid alkyl esters such as methyl crotonate and ethyl crotonate;

unsaturated dicarboxylic acid alkyl esters such as dimethyl maleate, dibutyl maleate, dimethyl fumarate, dibutyl fumarate, dimethyl itaconate, and dibutyl itaconate;

aromatic vinyl monomers such as styrene, p-tert-butylstyrene, $\alpha$-methylstyrene, vinyltoluene, vinylpyridine, chlorostyrene, and chloromethylstyrene;

nitrogen atom-containing monomers such as crotononitrile, N-vinylformamide, N-vinylpyrrolidone, N-vinylimidazole, N-vinylcarbazole, N-vinylquinoline, and N-vinylpiperidine;

halogenated olefins such as vinyl fluoride, vinylidene fluoride, tetrafluoroethylene, chlorotrifluoroethylene, hexafluoropropylene, vinyl chloride, and vinylidene chloride; $\alpha$-olefins such as ethylene, propylene, isobutylene, and 1-butene;

vinyl carboxylates such as vinyl acetate, vinyl propionate, vinyl pivalate, vinyl versatate, vinyl benzoate, and vinyl neodecanoate;

alkyl vinyl ethers such as methyl vinyl ether, ethyl vinyl ether, n-butyl vinyl ether, isobutyl vinyl ether; cycloalkyl vinyl ethers such as cyclohexyl vinyl ether;

carbonyl group-containing monomers such as acrolein and methyl vinyl ketone;

fluoroalkyl group-containing monomers such as perfluorocyclohexyl (meth)acrylate, di-perfluorocyclohexyl fumarate, and N-isopropyl fluorooctanesulfonic acid amide ethyl (meth)acrylate;

unsaturated dicarboxylic anhydrides such as maleic anhydride, citraconic anhydride, mesaconic anhydride, itaconic anhydride, and tetrahydro phthalic anhydride;

cyclic ether-containing monomers such as glycidyl (meth)acrylate, allyl glycidyl ether, tetrahydrofurfuryl (meth)acrylate;

silyl group-containing monomers such as vinyltrichlorosilane, vinyltriethoxysilane, vinyl tris($\beta$-methoxyethoxy)silane, and $\gamma$-(meth)acryloxypropyltrimethoxysilane;

hydroxy group-containing monomers such as 2-hydroxyethyl vinyl ether, 4-hydroxybutyl vinyl ether, and 2-hydroxyethyl ally ether; and

vinyl group-containing sulfonic acid compounds such as vinyl sulfonic acid, 3-acryloxypropane-1-sulfonic acid, 3-acryloxyoctyloxy benzenesulfonic acid, 3-acryloxy benzenediazosulfonic acid, 3-acryloxyazobenzene-4'-sulfonic acid, 2-acryloylamino-2-methylpropane-1-sulfonic acid, 2-acryloylamido-2-methylpropanesulfonic acid, and acrylonitrile-tert-butyl sulfonic acid; and salts thereof.

These monomers can be used alone or in combination of two or more.

In the present invention, the "(meth)acrylic monomer" refers to either an acrylic monomer or a methacrylic monomer or both and "(meth)acrylate" refers to either acrylate or methacrylate or both.

The monomer raw material of the acrylic polymer (a2) preferably contains a $C_{4-10}$ alkyl (meth) acrylate because abrasion resistance and washing resistance further improve. The amount of the $C_{4-10}$ alkyl (meth) acrylate in the monomer raw material is more preferably 10 to 100% by mass, even more preferably 40 to 100% by mass, and particularly preferably 50 to 100% by mass.

The glass transition temperature of the acrylic polymer (a2) is preferably -30°C to 110°C, more preferably 0°C to 110°C, and even more preferably 20°C to 110°C because abrasion resistance and washing resistance further improve.

In the present invention, the glass transition temperature is one determined by calculation in accordance with the FOX equation:

$$1/Tg = W1/Tg1 + W2/Tg2 + ...$$

(Tg: the glass transition temperature to be determined, W1: the weight fraction of a component 1, Tg1: the glass transition temperature of a homopolymer of the component 1). For the values of the glass transition temperature of the homopolymers of the respective components, values listed in "Nenchakugijutsu Handobukku (Adhesion Technique Handbook)" published by Nikkan Kogyo Shimbun, Ltd. or "Polymer Handbook" published by Wiley-Interscience are employed.

When polymerizing the acrylic polymer (a2), it is preferable to cause a polymerization initiator to coexist. Examples of the polymerization initiator include azo compounds such as 2,2'-azobis(isobutyronitrile), 2,2'-azobis(2-methylbutyronitrile), 2,2'-azobis(2-methylpropionamidine) dihydrochloride, 4,4'-azobis(4-cyano)valeric acid, and 2,2'-azobis(2-amidinopropane) dihydrochloride; organic peroxides such as benzoyl peroxide, tert-butyl hydroperoxide, tert-butyl peroxypivalate, tert-butyl peroxybenzoate, tert-butyl peroxy-2-ethylhexanoate, di-tert-butyl peroxide, di-tert-butyl hydroperoxide, cumene hydroperoxide, benzoyl peroxide, lauroyl peroxide, decanoyl peroxide, tert-butylcumyl peroxide, dicumyl peroxide, tert-butyl peroxylaurate, tert-butyl peroxybenzoate, cumene hydroperoxide, and para-menthane hydroperoxide; and inorganic peroxides such as hydrogen peroxide, ammonium persulfate, potassium persulfate, and sodium persulfate.

The amount of the polymerization initiator is preferably 0.005 to 5 parts by mass, more preferably 0.01 to 1 part by mass, and even more preferably 0.02 to 0.2 parts by mass per 100 parts by mass of a total of the monomer raw material of the acrylic polymer (a2).

The mass ratio (a1/a2) of the polyurethane (a1) to the acrylic polymer (a2) is preferably 95/5 to 50/50 and more preferably 90/10 to 65/35 because abrasion resistance and washing resistance further improve.

Examples of the aqueous medium (B) include water, organic solvents miscible with water, and mixtures thereof. Examples of the organic solvents miscible with water include alcohol solvents such as methanol, ethanol, n-propanol, isopropyl alcohol, 1,2-propylene glycol, and 1,3-butylene glycol; ketone solvents such as acetone and methyl ethyl ketone; glycol ether solvents such as ethylene glycol-n-butyl ether, diethylene glycol-n-butyl ether, diethylene glycol monoethyl ether acetate, diethylene glycol dimethyl ether, propylene glycol methyl ether, dipropylene glycol methyl ether, dipropylene glycol dimethyl ether, dipropylene glycol-n-butyl ether, and tripropylene glycol methyl ether; lactam solvents such as N-methyl-2-pyrrolidone and N-ethyl-2-pyrrolidone; and amide solvents such as N,N-dimethylformamide. Ketone solvents are preferred.

The aqueous medium (B) is preferably water only or a mixture of water and an organic solvent miscible with water, with water only being more preferred in consideration of safety and reduced impact on the environment. The content of water is preferably 50% by mass or more and more preferably 70% by mass or more in the aqueous medium (B).

The content of the aqueous medium (B) is preferably 30 to 80% by mass and more preferably 50 to 70% by mass in the binder for aqueous inkjet inks.

The binder for aqueous inkjet inks according to the present invention may further contain, as an additive (C), cross-linking agents, plasticizers, antistatic agents, waxes, surfactants, light stabilizers, flow regulators, dyes, leveling agents, rheology control agents, UV absorbers, antioxidants, photocatalytic compounds, antiseptics, viscosity adjusting agents, pH adjusting agents, chelating agents, or the like.

The amount of the additive (C) is preferably 20 parts by mass or less and more preferably 10 parts by mass or less per 100 parts by mass of the composite resin (A).

The composite resin (A) is obtained by polymerizing the monomer raw material of the acrylic polymer (a2) in the presence of the polyurethane (a1).

The binder for aqueous inkjet inks according to the present invention can be obtained by, for example, Step (I) of neutralizing part or all of the acid groups of the polyurethane (a1) using a basic compound and dispersing the obtained neutralized product in the aqueous medium (B) to produce a water dispersion of the polyurethane (a1) and subsequent Step (II) of supplying the (meth)acrylic monomer and, if necessary, other unsaturated monomers into the obtained water dispersion of the polyurethane (a1) to perform radical polymerization. In this process, the monomer, which is hydrophobic, is incorporated into the particles of the polyurethane (a1), and thus the core-shell-type particles having the shell part containing the polyurethane (a1) and the core part containing the acrylic polymer (a2) are formed. During the radical polymerization, the additive (C) may be caused to coexist if necessary or the additive (C) may be added after the polymerization reaction.

The aqueous inkjet ink according to the present invention contains the binder for aqueous inkjet inks and a colorant and may further contain an organic solvent, a surface adjusting agent, a pigment dispersant, a drying inhibitor, a penetrating agent, a surfactant, or the like.

Examples of the colorant include dyes and pigments, with pigments being preferably contained.

Examples of the pigments include compounds classified as pigments in the Colour Index (published by The Society of Dyers and Colourists), and examples thereof include inorganic pigments and organic pigments.

Examples of the inorganic pigments include iron oxide; carbon black (carbon black produced by a contact process, a furnace process, a thermal process, or the like); and titanium oxide.

Examples of the carbon black include #2300, #2200B, #990, #900, #960, #980, #33, #40, #45, #45L, #52, HCF88, MA7, MA8, and MA100 (the above are manufactured by Mitsubishi Chemical Corporation); the Raven series (5750, 5250, 5000, 3500, 1255, and 700, for example) (the above are manufactured by Columbia); the Regal series (400R, 330R, and 660R, for example), the Mogul series (L and 700, for example), the Monarch series (800, 880, 900, 1000, 10, 1300, and 1400, for example) (the above are manufactured by Cabot Corporation); the Color Black series (FW1, FW2, FW2V, FW18, FW200, S150, S160, and S1), the Printex series (35, U, V, and 1400U, for example), the Special Black series (6, 5, 4, and 4A, for example), the NIPEX series (150, 160, 170, 180, 95, 90, 85, 80, and 75, for example) (the above are manufactured by Orion Engineered Carbons S.A.).

As the organic pigments, one or two or more organic pigments can be used. According to the chemical structure, examples thereof include azo pigments such as azolake pigments, insoluble azo pigments, condensed azo pigments, and chelated azo pigments; polycyclic pigments such as phthalocyanine pigments, perylene pigments, perinone pigments, anthraquinone pigments, quinacridone pigments, dioxazine pigments, thioindigo pigments, isoindoline pigments, and quinophthalone pigments; dye chelates such as basic dye-type chelates and acidic dye-type chelates; nitro pigments; nitroso pigments; and aniline black.

Specific examples of the organic pigments include

yellow pigments such as C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185;
magenta pigments such as C.I. Pigment Red 5, 7, 12, 48(Ca), 48(Mn), 57(Ca), 57: 1, 112, 122, 123, 146, 150, 168, 176, 184, 185, 202, 209, 213, 269, and 282;
cyan pigments such as C.I. Pigment Blue 1, 2, 3, 15, 15: 1, 15: 2, 15: 3, 15: 4, 15: 6, 16, 22, 60, 63, and 66; orange pigments such as C.I. Pigment Orange 5, 13, 16, 17, 34, 36, 43, 51, 64, and 71;
violet pigments such as C.I. Pigment Violet 1, 3, 5: 1, 16, 19, 23, and 38;
green pigments such as C.I. Pigment Green 1, 4, 7, 8, 10, 17, 18, and 36; and
red pigments such as C.I. Pigment Red 1, 2, 3, 5, 17, 22, 23, 31, 38, 48: 2, 48: 3, 48: 4, 49: 1, 52: 2, 53: 1, 57: 1, 60: 1, 63: 1, 63: 2, 64: 1, 81, 83, 88, 101, 104, 105, 106, 108, 112, 114, 122, 123, 146, 149, 150, 166, 168, 170, 172, 177, 178, 179, 184, 185, 190, 193, 202, 207, 208, 209, 213, 219, 224, 254, and 264.

The primary particle size of the pigments is preferably 25 um or less, more preferably 10 um or less, and even more preferably 1 um or less from the viewpoint of dispersibility and may be, for example, 10 m or more or 30 nm or more from the viewpoint of stability. The primary particle size can be measured with a transmission electron microscope (TEM).

The volume average particle size of the pigments is preferably 1 um or less, more preferably 250 nm or less, and even more preferably 200 nm or less from the viewpoint of dispersibility and may be, for example, 10 nm or more or 50 nm or more from the viewpoint of stability. The volume average particle size of the pigments can be measured by laser diffraction.

The content of the pigments, in the colorant, preferably 80% by mass or more, more preferably 9% by mass or more, and even more preferably 95% by mass or more, with the upper limit being 100%.

The content of the colorant, in the solid content of the inkjet ink composition, is preferably 1% by mass or more, more preferably 5% by mass or more, and even more preferably 10% by mass or more, and preferably 90% by mass or less, more preferably 80% by mass or less, and even more preferably 70% by mass or less.

The pigment dispersant is a compound having a hydrophilic part and a hydrophobic part and has the action of improving the dispersibility of the pigments in aqueous media. Examples of the pigment dispersant include styrene-acrylic acid copolymers such as a styrene-(meth)acrylic acid copolymer, a styrene-(meth)acrylate-(meth)acrylic acid copolymer, and a (meth)acrylate-(meth)acrylic acid copolymer. When the styrene-acrylic acid copolymers are used, a basic compound such as potassium hydroxide may coexist in the aqueous pigment dispersion.

The content of the pigment dispersant is preferably 5 parts by mass or more, more preferably 10 parts by mass or more, and even more preferably 20 parts by mass or more, and preferably 100 parts by mass or less, more preferably 70 parts by mass or less, and even more preferably 50 parts by mass or less per 100 parts by mass of the colorant.

The organic solvent is preferably a hydrophilic organic solvent (an organic solvent miscible with water at 25°C), and specific examples thereof include ketone solvents such as acetone, methyl ethyl ketone, methyl butyl ketone, and methyl isobutyl ketone; alcohol solvents such as methanol, ethanol, 1-propanol, 2-propanol, 2-methyl-1-propanol, 1-butanol, 2-butanol, pentyl alcohol, and 2-methoxyethanol; ether solvents such as tetrahydrofuran, 1,4-dioxane, and 1,2-dimethoxyethane; amide solvents such as dimethylformamide and N-methyl pyrrolidone; glycol solvents such as ethylene glycol, diethylene glycol, triethylene glycol, tetraethylene glycol, propylene glycol, dipropylene glycol, polyethylene glycol, and polypropylene glycol; diol solvents such as butanediol, pentanediol, hexanediol, and diols homologous to these; glycol ester solvents such as propylene glycol laurate; glycol ether solvents such as diethylene glycol monoethyl ether, diethylene glycol monobutyl ether, diethylene glycol monohexyl ether, propylene glycol monoethyl ether, propylene glycol monomethyl ether, dipropylene glycol monoethyl ether, and triethylene glycol monoethyl ether; sulfolane; lactone solvents such as γ-butyrolactone; lactam solvents such as N-methylpyrrolidone, N-(2-hydroxyethyl)pyrrolidone, and 2-pyrrolidone; nitrile solvents such as acetonitrile; glycerin; glycerin derivatives such as polyoxyalkylene-added glycerin; and mixed solvents of one or two or more of these.

The amount of the organic solvent is preferably 1 to 300 parts by mass and more preferably 4 to 200 parts by mass per 100 parts by mass of the pigments from the viewpoint of dispersibility and storage stability.

The aqueous inkjet ink can be produced by mixing and dispersing in advance the colorant, the pigment dispersant, the organic solvent, and the aqueous medium, and a basic compound, which is used if necessary, to prepare a colorant dispersion and then mixing additives such as the resin composition, the drying inhibitor, the penetrating agent, and the surfactant. In preparing the colorant dispersion, examples of the method of mixing and dispersion include a wet dispersion process and a kneading dispersion process, with the wet dispersion process being preferred.

As the drying inhibitor, ones having miscibility with aqueous media and providing the effect of preventing clogging of an inkjet printer head are preferably used. Examples thereof include glycerin, ethylene glycol, diethylene glycol, triethylene glycol, triethylene glycol mono-n-butyl ether, polyethylene glycol with a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. Among them, as the drying inhibitor, glycerin and triethylene glycol are preferably used because they are highly safe and can impart excellent effects to ink drying properties and ejection performance. The content of the drying inhibitor is preferably 3 to 50% by mass in the aqueous inkjet ink.

Examples of the penetrating agent include lower alcohols such as ethanol and isopropyl alcohol; and glycol monoethers of alkyl alcohols such as ethylene glycol hexyl ether, diethylene glycol butyl ether, and propylene glycol propyl ether. The content of the penetrating agent is preferably 0.01 to 10% by mass in the aqueous inkjet ink from the viewpoint of improving ink penetration into recording media and adjusting the dot diameter of ink on recording media.

Examples of the surfactant include anionic surfactants, nonionic surfactants, cationic surfactants, and amphoteric surfactants, and anionic surfactants and nonionic surfactants are preferable from the viewpoint of adjusting ink characteristics such as surface tension.

Examples of the anionic surfactants include alkylbenzene sulfonates, alkylphenyl sulfonates, alkylnaphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates, and as specific examples of these, dodecylbenzene sulfonate, isopropylnaphthalene sulfonate, monobutylphenylphenol monosulfonate, monobutylbiphenyl sulfonate, and dibutylphenylphenol disulfonate are preferable.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol, and polyethylene glycol-polypropylene glycol block copolymers, and preferred among these are polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol, and polyethylene glycol-polypropylene glycol block copolymers.

Other examples of the surfactant are silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipids, and lysolecithin.

The content of the surfactant is preferably 0.001 to 2% by mass, more preferably 0.001 to 1.5% by mass, and even more preferably 0.01 to 1% by mass in the aqueous inkjet ink from the viewpoint of effectively preventing blurring or the like of printed images or the like.

Aqueous inks for inkjet recording can be used for printing on various recording media. The recording media can be absorbent recording media such as copy paper (PPC paper) commonly used in copiers, recording media having an absorbing layer for ink, non-water-absorbent recording media having no absorbency for ink, hard-to-absorb recording media having low water absorbency for ink, fabrics, films, or the like.

The binder for aqueous inkjet inks according to the present invention is excellent in storage stability, ejection properties, and the abrasion resistance and washing resistance of printed products and is thus useful for printing on various recording media.

[Examples]

The following describes the present invention in more detail with reference to specific examples. The weight average molecular weight and the average particle size were measured under the following measurement conditions.

[GPC Measurement Conditions]

Analysis apparatus: High-speed GPC apparatus ("HLC-8220GPC" manufactured by Tosoh Corporation)
Columns: The following columns manufactured by Tosoh Corporation, connected in series, were used.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Elution solvent: Tetrahydrofuran (THF)
Flow rate: 1.0 mL /minute
Injection amount: 100 μL (a tetrahydrofuran solution with a sample concentration of 4 mg/mL)
Standard samples: The following monodisperse polystyrenes were used to prepare a calibration curve.

(Monodisperse Polystyrenes)

"TSKgel Standard Polystyrene A-500" manufactured by Tosoh Corporation
"TSKgel Standard Polystyrene A-1000" manufactured by Tosoh Corporation
"TSKgel Standard Polystyrene A-2500" manufactured by Tosoh Corporation
"TSKgel Standard Polystyrene A-5000" manufactured by Tosoh Corporation
"TSKgel Standard Polystyrene F-1" manufactured by Tosoh Corporation
"TSKgel Standard Polystyrene F-2" manufactured by Tosoh Corporation
"TSKgel Standard Polystyrene F-4" manufactured by Tosoh Corporation
"TSKgel Standard Polystyrene F-10" manufactured by Tosoh Corporation
"TSKgel Standard Polystyrene F-20" manufactured by Tosoh Corporation
"TSKgel Standard Polystyrene F-40" manufactured by Tosoh Corporation
"TSKgel Standard Polystyrene F-80" manufactured by Tosoh Corporation
"TSKgel Standard Polystyrene F-128" manufactured by Tosoh Corporation
"TSKgel Standard Polystyrene F-288" manufactured by Tosoh Corporation
"TSKgel Standard Polystyrene F-550" manufactured by Tosoh Corporation

[Particle Size Measurement Conditions]

A binder for aqueous inkjet inks was diluted with water to make a dilute dispersion with a concentration of 0.1% by mass, and then using this dilute dispersion, measurement was performed with a particle size measurement apparatus ("Nanotrac Wave II" manufactured by MicrotracBEL Corporation: calculated by dynamic light scattering), and the 50% median size was defined as the average particle size.

(Synthesis Example 1: Synthesis of Acrylic Macromer (1))

Into a four-necked flask equipped with a thermometer, a stirrer, a reflux cooling tube, and a nitrogen introducing tube, 700 parts by mass of methyl ethyl ketone was charged. Next, to the reaction vessel, 291 parts by mass of methyl methacrylate, 8.7 parts by mass of 3-mercapto-1,2-propanediol, and 0.15 parts by mass of 2,2'-azobis(2-methylpropionitrile) were supplied and reacted to obtain an acrylic macromer (1) as a vinyl polymer having two hydroxy groups at one end with a number average molecular weight of 3,000.

(Production Example 1: Production of Polyurethane (a1-1) having Acid Groups)

To a four-necked flask equipped with a thermometer, a stirrer, a reflux cooling tube, and a nitrogen introducing tube, 50.9 parts by mass of PTMG1k ("PTMG1000" manufactured by Mitsubishi Chemical Corporation; polytetramethylene ether glycol with a number average molecular weight of 1,000) and 12.6 parts by mass of 2,2-dimethylolpropionic acid (DMPA) were added and stirred thoroughly. Next, 31.5 parts by mass of isophorone diisocyanate (IPDI) and 0.01 parts by mass of dibutyltin dilaurate as a catalyst were added, and the mixture was reacted at 75°C for 4 hours. After the reaction, methyl ethyl ketone (MEK) was added to make the solid concentration 60% by mass with MEK, and the solution was stirred for 30 minutes and cooled to 40°C or lower to obtain a urethane prepolymer solution. To the obtained urethane prepolymer solution, 5.0 parts by mass of potassium hydroxide was added to neutralize the acid groups. Next, ion exchanged water was added to make the solid concentration 18% under strong stirring to emulsify the polyurethane. After the reaction was completed, MEK was distilled off by vacuum distillation to obtain a water dispersion of a polyurethane (a1-1) having acid groups. The nonvolatile content of this water dispersion was 30% by mass.

(Production Example 2: Production of Polyurethane (a1-2) having Acid Groups)

A water dispersion of a polyurethane (a1-2) having acid groups was obtained in the same manner as in Production Example 1 except that the raw material formulation was changed to that in Table 1. The nonvolatile content of this water dispersion was 30% by mass.

(Production Example 3: Production of Polyurethane (a1-3) having Acid Groups)

A urethane prepolymer solution having acid groups was obtained in the same manner as in Production Example 1 except that the raw material formulation was changed to that in Table 1. To the obtained urethane prepolymer solution, 1.9 parts by mass of potassium hydroxide was added to neutralize the acid groups. Next, ion exchanged water was added to make the solid concentration 18% under strong stirring, and 2.7 parts by mass of ethylenediamine was added dropwise to cause an elongation reaction. After the reaction was completed, MEK was distilled off by vacuum distillation to obtain a water dispersion of a polyurethane (a1-3) having acid groups. The nonvolatile content of this water dispersion was 30% by mass.

(Production Example 4: Production of Polyurethane (a1-4) having Acid Groups)

A water dispersion of a polyurethane (a1-4) having acid groups was obtained in the same manner as in Production Example 3 except that the raw material formulation was changed to that in Table 1. The nonvolatile content of this water dispersion was 30% by mass.

(Production Example 5: Production of Polyurethane (a1-5) having Acid Groups)

A water dispersion of a polyurethane (a1-5) having acid groups was obtained in the same manner as in Production Example 1 except that the raw material formulation was changed to that in Table 1. The nonvolatile content of this water dispersion was 30% by mass.

(Production Example 6: Production of Polyurethane (a1-6) having Acid Groups)

A water dispersion of a polyurethane (a1-6) having acid groups was obtained in the same manner as in Production Example 1 except that the raw material formulation was changed to that in Table 1. The nonvolatile content of this water dispersion was 30% by mass.

Table 1 lists the formulations of the polyurethanes (a1-1) to (a1-6) having acid groups obtained above.

[Table 1]

| Table 1 | Production Ex. 1 | Production Ex. 2 | Production Ex. 3 | Production Ex. 4 | Production Ex. 5 | Production Ex. 6 |
|---|---|---|---|---|---|---|
| Polyurethane having acid groups | (a1-1) | (a1-2) | (a1-3) | (a1-4) | (a1-5) | (a1-6) |

(continued)

| Table 1 | | | Produc tion Ex. 1 | Produc tion Ex. 2 | Produc tion Ex. 3 | Produc tion Ex. 4 | Produc tion Ex. 5 | Produc tion Ex. 6 |
|---|---|---|---|---|---|---|---|---|
| Formulation (parts by mass) | Polyol having acid groups | DMPA | 12.6 | 9.3 | 7.0 | 4.9 | 9.3 | 9.1 |
| | Other polyols | PTMGlk | 50.9 | | | | | |
| | | Excenol 2020 | | 16.7 | | | | |
| | | UH-100 | | | 52.4 | | | |
| | | UH-200 | | | | 66.9 | | |
| | | G3450J | | | | | 31.3 | 30.4 |
| | | Acrylic macromer (1) | | 48.2 | | | 28.9 | 28.1 |
| | Polyisocyana te | Isophorone diisocyanate | 31.5 | 22.2 | 34.6 | | 26.9 | 26.1 |
| | | Dicyclohexylmethane diisocyanate | | | | 26.9 | | |
| | Neutrali zer | Potassium hydroxide | 5.0 | 3.6 | 1.9 | 2.0 | 3.6 | |
| | | Triethylamin e | | | | | | 6.3 |
| | Chain elongati ng agent | Hydrazine | | | | 1.3 | | |
| | | Ethylenediamine | | | 2.7 | | | |
| Acid value (mgKOH/g) | | | 55 | 40 | 30 | 21 | 40 | 40 |
| Weight average molecular weight | | | 46,000 | 14,000 | 23,000 | 109, 000 | 13,500 | 13,500 |

The abbreviations in Table 1 are as follows:

PTMG1k: "PTMG1000" manufactured by Mitsubishi Chemical Corporation; polytetramethylene ether glycol with a number average molecular weight of 1,000
Excenol 2020: "Excenol 2020" manufactured by AGC Inc.; polypropylene glycol with a number average molecular weight of 2,000
UH-100: "ETERNACOLL UH-100" manufactured by Ube Industries, Ltd.; crystalline polycarbonate diol with a number average molecular weight of 1,000
UH-200: "ETERNACOLL UH-200" manufactured by Ube Industries, Ltd.; crystalline polycarbonate diol with a number average molecular weight of 2000
G3450J: "DURANOL G3450J" manufactured by Asahi Kasei Corporation; a number average molecular weight of 800

(Example 1: Production of Binder (1) for Aqueous Inkjet Inks)

To 233.4 parts by mass of the water dispersion of the polyurethane (a1-1) having acid groups obtained in Production Example 1, 236.6 parts by mass of ion exchanged water was added, and 15 parts by mass of methyl methacrylate and 15 parts by mass of 2-hydroxyethyl (meth)acrylate were reacted with 0.01 parts by mass of ammonium persulfate (APS) under the condition of monomer batch emulsion polymerization (reaction temperature: 80°C). Next, concentration for removing unreacted monomers was performed, and the water content was adjusted to 20% by mass to obtain a binder (1) for aqueous inkjet inks as a composite resin water dispersion. The mass ratio (a1/a2) was 70/30 and the glass transition temperature of the acrylic polymer was 78°C. The particle size distribution of the composite resin presented a single peak, confirming the formation of core-shell particles, with an average particle size of 24 nm.

(Examples 2 to 6: Production of Binders (2) to (6) for Aqueous Inkjet Inks)

Binders (2) to (6) for aqueous inkjet inks were obtained as composite resin water dispersions in the same manner as in Example 1 except that the water dispersion of the polyurethane (a1-1) having acid groups used in Example 1 was changed to water dispersions of the polyurethanes (a1-2) to (a1-6) having acid groups. The mass ratio (a1/a2) was 70/30 for all. The particle size distribution of the composite resin presented a single peak, confirming that the formation of core-shell particles, with an average particle size of 83 nm for the binder (2) for aqueous inkjet inks, 44 nm for the binder (3) for aqueous inkjet inks, 45 nm for the binder (4) for aqueous inkjet inks, 111 nm for the binder (5) for aqueous inkjet inks, and 123 nm for the binder (6) for aqueous inkjet inks.

(Example 7: Production of Binder (7) for Aqueous Inkjet Inks)

To 233.4 parts by mass of the water dispersion of the polyurethane (a1-2) having acid groups obtained in Production Example 1, 236.6 parts by mass of ion exchanged water was added, and 30 parts by mass of methyl methacrylate was reacted with 0.01 parts by mass of ammonium persulfate (APS) under the condition of monomer batch emulsion polymerization (reaction temperature: 80°C). Next, concentration for removing unreacted monomers was performed, and the water content was adjusted to 20% by mass to obtain a binder (7) for aqueous inkjet inks as a composite resin water dispersion. The mass ratio (a1/a2) was 70/30. The glass transition temperature of the acrylic polymer was 105°C. The particle size distribution of the composite resin presented a single peak, confirming the formation of core-shell particles. The average particle size was 115 nm.

(Example 8: Production of Binder (8) for Aqueous Inkjet Inks)

To 233.4 parts by mass of the water dispersion of the polyurethane (a1-2) having acid groups obtained in Production Example 1, 236.6 parts by mass of ion exchanged water was added, and 20 parts by mass of ethyl acrylate and 10 parts by mass of styrene were reacted with 0.01 parts by mass of ammonium persulfate (APS) under the condition of monomer batch emulsion polymerization (reaction temperature: 80°C). Next, concentration for removing unreacted monomers was performed, and the water content was adjusted to 20% by mass to obtain a binder (8) for aqueous inkjet inks as a composite resin water dispersion. The mass ratio (a1/a2) was 70/30. The glass transition temperature of the acrylic polymer was 9°C. The particle size distribution of the composite resin presented a single peak, confirming the formation of core-shell particles. The average particle size was 121 nm.

(Comparative Example 1: Binder (R1) for Aqueous Inkjet Inks)

The water dispersion of the polyurethane (a1-1) having acid groups obtained in Production Example 1 was designated as a binder (R1) for aqueous inkjet inks.

[Production of Pigment Dispersion]

Into a 0.5-L jacket-equipped tank of a mini planetary mixer (mini-PLM manufactured by Aicohsha Mfg. Co., Ltd.), 50 parts by mass of C.I. Pigment Red 122 ("FASTOGEN Super Magenta RY" manufactured by DIC Corporation) and C.I. Pigment Blue 15:3 (SBG-SD manufactured by DIC Corporation) and 10 parts by mass of a styrene-acrylic acid copolymer (weight average molecular weight: 11,000, acid value: 180 mgKOH/g) were fed in order, and the mixture was stirred for 10 minutes at 80 rpm for rotation and 25 rpm for revolution with the temperature of the jacket-equipped tank heated at 80°C.
Next, with the temperature of the jacket-equipped tank maintained at 80°C, 5.3 parts by mass of a 34% by mass aqueous potassium hydroxide solution and 30 parts by mass of triethylene glycol were added to the above composition, and kneading was performed for 60 minutes at 80 rpm for rotation and 25 rpm for revolution to obtain a solid kneaded product.
To the kneaded product, 100 parts by mass of ion exchanged water and 10 parts by mass of triethylene glycol were added and mixed with a juicer mixer for 10 minutes. By mixing ion exchanged water and Proxel-GXL (Lonza Japan Ltd.), an aqueous pigment dispersion with a pigment concentration of 15.0% by mass, a triethylene glycol concentration of 12.0% by mass, a Proxel-GXL concentration of 0.1% by mass, and a nonvolatile content of 18.2% by mass was obtained.

[Production of Aqueous Inkjet Ink]

The pigment dispersion obtained above in an amount of 20.0 parts by mass, 3.3 parts by mass of the binder for aqueous inkjet inks, 8.0 parts by mass of 2-pyrrolidinone (manufactured by BASF), 8.0 parts by mass of triethylene glycol mono-n-butyl ether (manufactured by Tokyo Chemical Industry Co., Ltd.), 3.0 parts by mass of glycerin (manufactured by Kao Corporation), 0.5 parts by mass of Surfynol 440 (a nonionic surfactant manufactured by Evonik Japan Co., Ltd.), and 57.3 parts by mass of ion exchanged water were stirred for 1 hour.
Next, the mixture adjusted to have a pH in a range of 9 to 9.8 using a 5% by mass aqueous potassium hydroxide solution was filtrated with a filter with a pore size of 5 to 10 um to obtain an aqueous inkjet ink (with a pigment concentration of 3.0% and a urethane solid concentration of 1.0%).

[Evaluation of Abrasion Resistance]

The aqueous inkjet ink obtained above was filled into a blank ink cartridge of a commercially available inkjet printer ENVY4500 (manufactured by HP Development Company, L.P.), and solid printing with a printing density setting of 100% was performed on a printing face of photo printing paper (HP Advanced Photo Paper manufactured by HP Development Company, L.P.). After drying the printed product for 1 minute at room temperature, the printed face was rubbed back and forth three times with the same paper as the printed paper under a load of 200 g using a Gakushintype friction testing machine.

Next, the printed face of the printed product was scanned and converted into image data, and a pixel remaining rate (%) was calculated based on the following expression, and abrasion resistance was evaluated in accordance with the following criteria.

Pixel remaining rate (%) = (number of pixels in colored part after abrasion test)/(number of pixels in colored part before abrasion test) $\times$ 100

○: 40% or more
Δ: 20% or more and less than 40%
x: Less than 20%

[Evaluation of Washing Resistance]

The entire face of cotton broadcloth was dyed and then dried at 150°C for 5 minutes. Subsequently, a washing solution prepared based on JIS L 0844: 2011 was heated to 50°C, and the cotton broadcloth was immersed therein (30 minutes). It was then stirred in a food mixer for 1 minute, and the test sample taken out was rinsed with water and then dried. The optical density (OD) of the cotton broadcloth after mixer stirring was measured with an integrating sphere spectrocolorimeter X-Rite. An OD retention rate (%) was calculated based on the following expression, and washing resistance was evaluated in accordance with the following criteria.

OD retention rate (%) = (OD of cotton broadcloth after stirring)/(OD of cotton broadcloth before immersion in washing solution) $\times$ 100

○: 50% or more
Δ: 45% or more and less than 50%
x: Less than 45%

Table 2 lists the formulations and evaluation results of the binders (1) to (8) and (R1) for aqueous inkjet inks obtained above.

[Table 2]

| Table 2 | Ex. 1 | Ex. 2 | Ex. 3 | Ex. 4 | Ex. 5 | Ex. 6 | Ex. 7 | Ex. 8 | Comp. Ex. 1 |
|---|---|---|---|---|---|---|---|---|---|
| Binder for aqueous inkjet inks | (1) | (2) | (3) | (4) | (5) | (6) | (7) | (8) | (R1) |
| Abrasion resistance (pixel remaining rate) | ○ | ○ | ○ | ○ | ○ | Δ | ○ | ○ | x |
| | 450 | 42% | 62% | 69% | 50% | 33% | 65% | 39% | 60 |
| Washing resistance (optical density retention rate) | ○ | ○ | ○ | ○ | ○ | Δ | ○ | ○ | x |
| | 770 | 910 | 98% | 91% | 78% | 48% | 70% | 61% | 44% |

It was confirmed that the printed products obtained from Examples 1 to 8, which are the binders for aqueous inkjet inks of the present invention, were excellent in abrasion resistance and washing resistance.

On the other hand, it was confirmed that Comparative Example 1, which is an example using the urethane resin that does not contain the acrylic polymer (a2), which is an essential component of the present invention, was poor in the abrasion resistance and washing resistance of the obtained printed product.

**Claims**

1.  A binder for aqueous inkjet inks comprising:

    a composite resin (A); and
    an aqueous medium (B),
    the composite resin (A) forming core-shell-type particles having a shell part containing a polyurethane (a1) having acid groups and a core part containing an acrylic polymer (a2).

2.  The binder for aqueous inkjet inks according to claim 1, wherein the polyurethane (a1) has an acid value of 10 to 70 mgKOH/g.

3.  The binder for aqueous inkjet inks according to claim 1 or 2, wherein the acrylic polymer (a2) has a $C_{4-10}$ alkyl (meth)acrylate as an essential raw material.

4.  The binder for aqueous inkjet inks according to any one of claims 1 to 3, wherein a mass ratio (a1/a2) of the polyurethane (a1) to the acrylic polymer (a2) is 95/5 to 50/50.

5.  An aqueous inkjet ink comprising the binder for aqueous inkjet inks according to any one of claims 1 to 4.

6.  A printed layer formed by the aqueous inkjet ink according to claim 5.

## INTERNATIONAL SEARCH REPORT

| International application No. |
|---|
| **PCT/JP2022/039035** |

**A. CLASSIFICATION OF SUBJECT MATTER**

*C09D 11/30*(2014.01)i; *B41M 5/00*(2006.01)i; *D06P 5/30*(2006.01)i; *B41J 2/01*(2006.01)i
FI: C09D11/30; B41M5/00 120; B41J2/01 501; D06P5/30

According to International Patent Classification (IPC) or to both national classification and IPC

**B. FIELDS SEARCHED**

Minimum documentation searched (classification system followed by classification symbols)

B41J2/01; C09D11/30; B41M5/00; D06P5/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-246486 A (DIC CORP) 13 December 2012 (2012-12-13) claims 1-2, 5, 9-10, 12-13, paragraphs [0017]-[0086], examples | 1-6 |
| X | JP 2013-194206 A (DIC CORP) 30 September 2013 (2013-09-30) claims 12-16, paragraphs [0118]-[0132], examples | 1-6 |
| X | JP 2013-199606 A (DIC CORP) 03 October 2013 (2013-10-03) claims 12-16, paragraphs [0113]-[0127], examples | 1-6 |
| A | JP 2016-520667 A (CABOT CORPORATION) 14 July 2016 (2016-07-14) claims 1-55, examples | 1-6 |
| A | JP 6-1940 A (DAINIPPON INK & CHEM INC) 11 January 1994 (1994-01-11) claims 1, 2, paragraphs [0007]-[0035], examples | 1-6 |
| A | JP 8-60063 A (DAINIPPON INK & CHEM INC) 05 March 1996 (1996-03-05) claims 1, 8, paragraphs [0037]-[0052], [0074], examples 1-4 | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/039035**

| Patent document cited in search report | | | Publication date (day/month/year) | Patent family member(s) | | | Publication date (day/month/year) |
|---|---|---|---|---|---|---|---|
| JP | 2012-246486 | A | 13 December 2012 | US 2013/0245157 A1<br>claims 16-25, paragraphs [0020]-[0095], examples<br>WO 2012/073563 A1<br>EP 2647674 A1<br>TW 201237131 A | | | |
| JP | 2013-194206 | A | 30 September 2013 | (Family: none) | | | |
| JP | 2013-199606 | A | 03 October 2013 | (Family: none) | | | |
| JP | 2016-520667 | A | 14 July 2016 | US 2014/0275395 A1<br>claims 1-55, examples<br>WO 2014/150019 A1<br>CN 105051073 A | | | |
| JP | 6-1940 | A | 11 January 1994 | (Family: none) | | | |
| JP | 8-60063 | A | 05 March 1996 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6119919 B

### Non-patent literature cited in the description

- Nenchakugijutsu Handobukku (Adhesion Technique Handbook). Nikkan Kogyo Shimbun, Ltd,
- Polymer Handbook. Wiley-Interscience
- Colour Index. The Society of Dyers and Colourists